(19) Europäisches Patentamt

European Patent Office

Office européen des brevets

(11) Veröffentlichungsnummer: **0 443 152 A1**

(12) **EUROPÄISCHE PATENTANMELDUNG**

(21) Anmeldenummer: 90124397.2

(22) Anmeldetag: 17.12.90

(51) Int. Cl.⁵: **F16L 59/10, A44B 19/16**

(30) Priorität: 19.02.90 DE 9001931 U

(43) Veröffentlichungstag der Anmeldung:
28.08.91 Patentblatt 91/35

(84) Benannte Vertragsstaaten:
DE ES FR GB IT SE

(71) Anmelder: REHAU AG + Co
Rheniumhaus
W-8673 Rehau(DE)

(72) Erfinder: **Der Erfinder hat auf seine Nennung verzichtet**

(54) **Längsgeteilte schlauchförmige Umhüllung.**

(57) Die Erfindung betrifft eine längsgeteilte schlauchförmige Umhüllung aus polymerem Material. Die Umhüllung besitzt einen längsverlaufenden Rastverschluß, der entlang der einen Längskante eine einstückig angeformte Rastnut und entlang der anderen Längskante eine einstückig angeformte Rastfeder aufweist. Erfindungsgemäß verläuft die flexible Schlauchhülle (1) in Verlängerung des außenliegenden Schenkels (21) der die Rastnut (3) bildenden U-förmigen Aufnahme. Die Rastfeder (4) besitzt einen T-förmigen Basisbereich (41) mit einem nach außen gerichteten verbreiterten Schenkel (411). Im Bereich der Verbreiterung ist dieser Schenkel (411) mit der flexiblen Schlauchhülle (1) einstückig verbunden. Aus der Mitte des T-förmigen Basisbereichs (41) ragt ein Haltesteg (43) ab, welcher die pilzkopfartige Raste (42) trägt.

EP 0 443 152 A1

## LÄNGSGETEILTE SCHLAUCHFÖRMIGE UMHÜLLUNG

Die Neuerung betrifft eine längsgeteilte schlauchförmige Umhüllung aus polymerem Material mit einem längsverlaufenden Rastverschluß, der entlang der einen Längskante eine einstückig angeformte Rastnut und entlang der anderen Längskante eine einstückig angeformte Rastfeder besitzt.

Aus der DE-OS 29 00 796 ist eine derartige schlauchförmige Umhüllung bekannt, welche einen längslaufenden Reißverschluß aus zwei längs eines Folienmantels angeordneten Profilteilen besitzt, welche miteinander verhakbar sind. An einem der Profilteile ist einstückig eine längsverlaufende Lasche angeformt, welche den geschlossenen Reißverschluß von innen abdeckt. Dazu trägt die Lasche an ihrer freien Außenseite ein Haftmittel und ist mit dieser Seite an der Innenwand des Folienmantels festklebbar.

Aus der Europäischen Patentanmeldung 0 199 349 ist weiter eine längsgeteilte Manschette aus schrumpfbarem Material bekannt, welche einen Rastverschluß entlang ihrer Längskanten aufweist. Dabei ist an der einen Längskante eine Längsnut aus zwei längsverlaufenden Schenkeln angeordnet, während an der anderen Längskante ein Hakenteil mit einem federnden Ansatz angeformt ist. Die die Längsnut begrenzenden Schenkel einerseits und das Hakenteil andererseits sind einstückig längsverlaufend an die freien Ränder des Folienkörpers angeformt. Die die Längsnut begrenzenden Schenkel sowie das Hakenteil sind in einem höheren Maße vernetzt als der zur Schrumpfung vorgesehene Manschettenbereich.

Die zum Stand der Technik zählenden verschließbaren Manschetten sind bei ihrer Verwendbarkeit mit dem Nachteil behaftet, daß die Verschlußbereiche außenliegend angeordnet sind und demzufolge bei verschlossenen Manschetten nach außen überstehen. Dadurch entsteht eine unebene Außenseite im geschlossenen Zustand solcher Manschetten, was die Gefahr der Beschädigung z.B. beim Einsatz als Kabelbaumumhüllungen in Motorräumen, Kabelräumen und dgl. erhöht.

Ein weiterer Nachteil solcher bekannter, manschettenförmiger Schlauchumhüllungen ist darin zu sehen, daß sie ohne zusätzlichen Fertigungs- und Montageaufwand nicht spritzwassergeschützt verschlossen werden können. Hier zeigt die DE-OS 29 00 796 eine Möglichkeit auf, die jedoch nur durch nachträglichen Montageaufwand eine Umhüllungsmanschette in spritzwasserdichter Ausführung ergibt.

Hier setzt die Neuerung ein, die es sich zur Aufgabe gestellt hat, eine längsgeteilte schlauchförmige Umhüllung anzugeben, die bei geringstmöglichem Herstell- und Montageaufwand eine spritzwassergeschützte Abdeckung der umhüllten Substrate ergibt. Neuerungsgemäß wird dazu vorgeschlagen, daß die flexible Schlauchhülle in Verlängerung des außenliegenden Seitenschenkels der die Rastnut bildenden U-förmigen Aufnahme verläuft, daß die Rastfeder einen T-förmigen Basisbereich besitzt, dessen nach außen gerichteter Schenkel verbreitert und im Bereich der Verbreiterung mit der flexiblen Schlauchhülle einstückig verbunden ist, und daß aus der Mitte des Basisbereichs ein die pilzkopfartige Raste tragender Haltesteg abragt.

Es hat sich als vorteilhaft herausgestellt, daß die Schenkel der Rastnut und die Rastfeder aus hartem Polymermaterial gebildet sind.

Ferner ist es zweckmäßig, daß die Schenkel der Rastnut an ihren freien Enden zum Innenraum hin gerichtete Rastnasen besitzen.

In den U-förmigen Aufnahmeraum der Rastnut kann vorteilhaft bereits bei der Herstellung der Manschette ein dauerelastischer Klebstoff eingebracht sein. Im Verrasterungszustand stützen sich ferner die freien Enden der Seitenschenkel der Rastnut an den inneren Oberflächen des T-förmigen Basisbereichs der Rastfeder ab. Dabei taucht ggf. die pilzkopfartige Raste in den dauerelastischen Klebstoff der Aufnahmenut des U-förmigen Aufnahmeraums der Rastnut ein und bildet auf diese Weise mit dem Verschließen des längsverlaufenden Rastverschlusses in einem Arbeitsgang eine spritzwassergeschützte Umhüllung des zu schützenden Substrats.

Die neuerungsgemäße schlauchförmige Umhüllung hat gegenüber dem bekannten Stand der Technik den Vorteil, daß mit einem einzigen Montagearbeitsgang eine spritzwassergeschützte Umhüllung eines zu schützenden Substrats erzeugt werden kann.

Ein weiterer Vorteil ist darin zu sehen, daß durch die harte Materialeinstellung der Verschlußelemente eine Herstellung des Verschlusses ohne zusätzliche Arbeitsmittel erfolgen kann. Das Montagepersonal drückt die Verschlußelemente einfach mit der Hand zusammen und schafft so die sichere Umhüllung um das Substrat. Auf diese Weise läßt sich die so hergestellte sichere Umhüllung im Bedarfsfall auch von Hand wieder öffnen. Erforderlich hierfür sind Zugkräfte, die die Haltekräfte der pilzkopfartigen Raste in der Rastnut sowie ggf. die Haftkraft des eingesetzten Klebers übersteigen. Durch konstruktive Maßnahmen kann erreicht werden, daß hier die Auszugskräfte so eingestellt sind, daß ein Öffnen des Verschlusses von Hand möglich ist.

Auf diese Weise braucht beispielsweise bei der nachträglichen Einbringung weiterer zu schützender Substrate in die Schlauchhülle diese nicht aufgeschnitten zu werden, sondern sie wird einfach geöffnet, das weitere Substrat - z.B. ein elektrisches Kabel - eingelegt und danach wieder verschlossen. Der gleiche Vorgang kann erfolgen bei der Entnahme beispielsweise beschädigter oder nicht mehr benötigter Kabel aus der hergestellten sicheren Umhüllung.

Auch bei der Herstellung von Kabelverzweigungen muß die Umhüllung nicht mehr - wie beim Stand der Technik - ab- oder aufgeschnitten werden. Die sichere Umhüllung wird vielmehr nur im Bereich der Verzweigung geöffnet und das benötigte Kabel durch diese Öffnung herausgeführt. Die Öffnung wird danach von außen verschlossen und somit die spritzwassergeschützte Umhüllung des Substrats wieder hergestellt.

Die neuerungsgemäße schlauchförmige Umhüllung kann aus verschiedenen Materialien hergestellt werden, wobei das weich eingestellte Manschettenteil mit den härter eingestellten Verschlußelementen beispielsweise im Wege der Koextrusion einstückig erzeugt werden kann.

Für das weich eingestellte Manschettenteil können beispielsweise Werkstoffe wie Polyvinylchlorid weich, Santoprene, Polyurethan und ähnliche Materialien verwendet werden. Die härter eingestellten Verschlußelemente können beispielsweise aus Polyvinylchlorid hart, Polyamid, Polyethylen, Polycarbonat und ähnlichen Materialien bestehen. Die in den Nuten der Verbindungselemente befindliche Klebe- bzw. Abdichtmasse kann beispielsweise aus Butyl bestehen. Es sind jedoch auch alle anderen Klebematerialien einsetzbar, die eine zur dauerhaften Herstellung der Klebeverbindung erforderliche Adhäsionskraft und Elastizität aufweisen.

In der Zeichnung ist ein Ausführungsbeispiel der neuerungsgemäßen Schlauchhülle schematisch dargestellt; es zeigen:

Fig. 1     die Schlauchhülle in geöffnetem Zustand

Fig. 2     die Schlauchhülle in geschlossenem Zustand

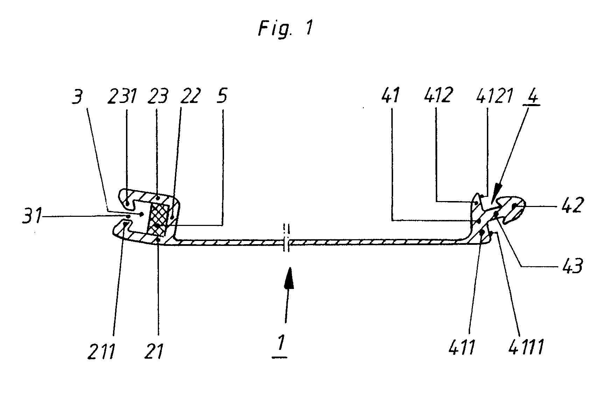

Die schlauchförmige Umhüllung in Fig. 1 besteht aus der flexiblen Schlauchhülle 1, welche in Verlängerung des außenliegenden Seitenschenkels 21 in der die Rastnut 3 bildenden U-förmigen Aufnahme verläuft. Am anderen freien Ende der flexiblen Schlauchhülle 1 ist die Rastfeder 4 angeformt.

In die durch die Schenkel 21, 22, 23 begrenzte Rastnut 3 ist der dauerelastisache Klebstoff 5 eingebracht.

Die Schenkel 21, 23 der Rastnut 3 besitzen an ihren freien Enden zum Innenraum hin gerichtete Rastnasen 211, 231. Zwischen den freien Enden der Rastnasen 211, 231 ist eine Durchgangsöffnung 31 zur Rastnut 3 belassen, durch welche bei der Herstellung der Rastverbindung die Raste 42 in die Rastnut 3 eingedrückt wird. Hierbei ermöglicht die Flexibilität des zur Herstellung der Rastelemente verwendeten Materials das Auseinanderdrücken der Schenkel 21, 23 der Rastnut 3, bis die Raste 42 in ihrer vollen Länge in die Rastnut 3 eingedrückt ist. Danach federn die Schenkel 21, 23 hinter die Raste 42 zurück, wobei die zum Innenraum hin gerichteten Rastnasen 211, 221 die Raste 42 hintergreifen.

Bei der Herstellung der Rastverbindung taucht die über den Basisbereich 41 und den Haltesteg 43 einstückig mit der Schlauchhülle 1 verbundene Raste 42 über die Öffnung 31 unter Aufspreizung der Schenkel 21, 23 in die Rastnut 3 ein und dringt dabei bis gegen den Grund der Aufnahmenut 3 vor.

Hierbei wird der am Grund der Rastnut 3 angeordnete dauerelastische Kleber 6 innerhalb der Rastnut 3 verdrängt und hintergreift die Raste 42. Durch diese Verbindungen wird ein dauerhaft spritzwassergeschützter Rastverschluß herbeigeführt.

Der Verbindungsvorgang zwischen Raste 42 einerseits und Rastnut 3 andererseits ist beendet, wenn die freien Enden der Schenkel 21, 23 sich auf den Oberflächen 4111, 4121 der Schenkel 411, 412 des T-förmigen Basisbereichs 41 abstützen. Die Schlauchhülle 1 kann mit oder ohne Klebstoff 5 in der Rastnut 3 verwendet werden.

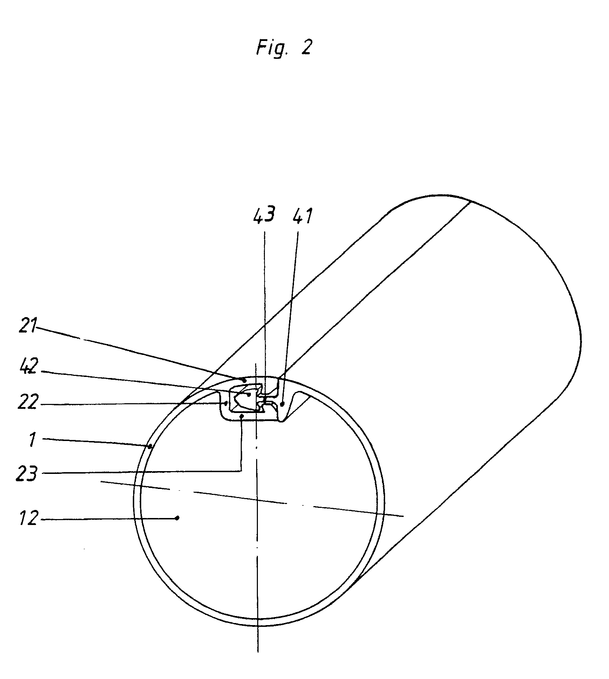

Fig. 2 zeigt die Schlauchhülle in geschlossenem Zustand mit hergestellter Rastverbindung. Aus dieser Darstellung ergibt sich, daß die Verbindungselemente, nämlich die zur Herstellung der Rastnut 3 erforderlichen Schenkel 21, 22, 23 einerseits und die Raste 42 mit der Basis 41 und dem Haltesteg 43 andererseits in den Innenraum 12 der schlauchförmigen Umhüllung 1 hineinragen. Dadurch ergibt sich nach außen auch im Verbindungsbereich der freien Enden der Schlauchhülle 1 ein glatter Abschluß ohne Überstand.

**Patentansprüche**

1. Längsgeteilte schlauchförmige Umhüllungen aus polymerem Material mit einem längsverlaufenden Rastverschluß, der entlang der einen Längskante eine einstückig angeformte Rastnut und entlang der anderen Längskante eine einstückig angeformte Rastfeder besitzt, dadurch gekennzeichnet, daß die flexible Schlauchhülle (1) in Verlängerung des außenliegenden Schenkels (21) der die Rastnut (3) bildenden U-förmigen Aufnahme verläuft, daß die Rastfeder (4) einen T-förmigen Basisbereich (41) besitzt, dessen nach außen gerichteter Schenkel (411) verbreitert und im Bereich der Verbreiterung mit der flexiblen Schlauchhülle (1) einstückig verbunden ist, und daß aus der Mitte des Basisbereichs (41) ein die pilzkopfartige Raste (42) tragender Haltesteg (44) abragt.

2. Schlauchförmige Umhüllung nach Anspruch 1, dadurch gekennzeichnet, daß die Schenkel (21, 22, 23) der Rastnut (3) und die Raste (42) mit ihrem Basisbereich (41) und dem Haltesteg (44) aus hart eingestelltem Polymermaterial gebildet sind.

3. Schlauchförmige Umhüllung nach Ansprüchen 1 und 2, dadurch gekennzeichnet, daß die Schenkel (21, 22) der Rastnut (3) an ihren freien Enden zum Innenraum hin gerichtete Rastnasen (211, 221) besitzen.

4. Schlauchförmige Umhüllung nach Anspruch 1, dadurch gekennzeichnet, daß in den U-förmigen Aufnahmeraum der Rastnut (3) ein dauerelastischer Klebstoff (5) eingebracht ist.

5. Schlauchförmige Umhüllung nach Anspruch 1, dadurch gekennzeichnet, daß die freien Enden der Seitenschenkel (21, 22) der Rastnut (3) sich im Verrasterungszustand an den inneren Oberflächen (4111, 4121) der Schenkel (411, 412) des T-förmigen Basisbereichs (41) der Rastfeder (4) abstützen.

Fig. 1

Fig. 2

### Europäisches Patentamt

# EUROPÄISCHER RECHERCHENBERICHT

Nummer der Anmeldung

## EP 90 12 4397

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 517 702 (A.L. MUELLER)<br>* Spalte 2, Zeilen 30-36; Figuren *<br>– – – | 1,2,3,5 | F 16 L 59/10<br>A 44 B 19/16 |
| A | GB-A-2 200 713 (YAMATO KOGYO K.K.)<br>* Seite 6, Zeilen 3-10; Figuren 1,2 *<br>– – – | 1-3,5 | |
| A | DE-C-9 353 40 (SVENSKA AKTIEBOLAGET POLVA)<br>* Seite 2, Zeilen 10-13; Figuren 8,9 *<br>– – – – – | 1-3,5 | |

| | |
|---|---|
| | RECHERCHIERTE SACHGEBIETE (Int. Cl.5) |
| | F 16 L<br>A 44 B<br>B 65 D |

Der vorliegende Recherchenbericht wurde für alle Patentansprüche erstellt

| Recherchenort | Abschlußdatum der Recherche | Prüfer |
|---|---|---|
| Den Haag | 22 April 91 | NEUMANN E. |